# EUROPEAN PATENT APPLICATION

(11) **EP 2 700 873 A1**
(43) Date of publication of application: **26.02.2014**
(21) Application number: 12181362.0
(22) Date of filing: 22.08.2012
(51) Int. Cl.: F21V 21/29, F21S 6/00, F16C 11/06, F16M 11/14, F21V 21/32

(54) **Articulated lamp**

(71) Applicant: Crystal Eyes Enterprise Co., Ltd., New Taipei City (TW)
(72) Inventor: Lin, Benny, Linkou Dist. New Taipei City (TW)
(74) Representative: Pallini, Diego

(57) **Abstract**

An articulated lamp has a base (10), a support (2) and a lighting device (30). The support (2) has multiple ball joint assemblies (20, 20A) sequentially connected to each other and mounted on and protruding up from the base (10). The lighting device (30) is connected to a topmost ball joint assembly (20A). When connecting studs (24) of the ball joint assemblies (20, 20A) are pivoted or rotated, directions and ranges in which the lighting device (30) illuminates are adjusted. As the amount of the ball joint assemblies (20, 20A) changes, heights of the lighting device (30) and ranges in which the lighting device (30) illuminates are diversely adjusted.

## Description

### Field of the Invention

The present invention relates to a lamp, especially to an articulated lamp that has a lighting device, and heights of the lighting device are adjustable by selectively changing amounts of ball joint assemblies of the articulated lamp.

### Description of the Prior Art(s)

A conventional lamp has a base, a pole or a flexible tube mounted on and protruding up from the base, and a light mounted on a top end of the pole or a flexible tube to provide illumination.

However, since a length of the pole or the flexible tube is fixed, to adjust the illumination height and to extend the illumination range only relies on pivoting the light up and down. Therefore, the illumination height and range are limited. Consequently, manipulation of the conventional lamp is also limited. The user of the lamp thus may need to buy further lamps in order to illuminate new or different areas, which wastes money and clutters space.

The main objective of the present invention is to provide an articulated lamp. The articulated lamp has a base, a support and a lighting device. The support has multiple ball joint assemblies sequentially connected to each other and mounted on and protruding up from the base. Each ball joint assembly has a seat having a connecting hole and a mounting tube, a first gasket ring mounted on a distal edge of the mounting tube of the seat, a housing mounted on the mounting tube of the seat, and a connecting stud having: a ball head rotatably mounted in the housing and a shaft attached to the seat of a following ball joint assembly. The lighting device is connected to a topmost ball joint assembly.

When connecting studs of the ball joint assemblies are pivoted or rotated, directions and ranges in which the lighting device illuminates are adjusted. The first gasket rings and the second gasket rings prevent the ball heads of the connecting stud and the mounting tube of the seat from abrading each other. As the amount of the ball joint assemblies changes, heights of the lighting device and ranges in which the lighting device illuminates are diversely adjusted.

### IN THE DRAWINGS:

Fig. 1 is a perspective view of an articulated lamp in accordance with the present invention;
Fig. 2 is an enlarged exploded perspective view of the articulated lamp in Fig. 1;
Fig. 3 is an enlarged side view in partial section of the articulated lamp in Fig. 1;
Fig. 4 is a further enlarged side view in partial section of the articulated lamp in Fig. 3;
Fig. 5 is an operational side view in partial section of the articulated lamp in Fig. 1;
Fig. 6 is an enlarged operational side view in partial section of the articulated lamp in Fig. 4; and
Fig. 7 is a perspective view of another embodiment of an articulated lamp in accordance with the present invention.

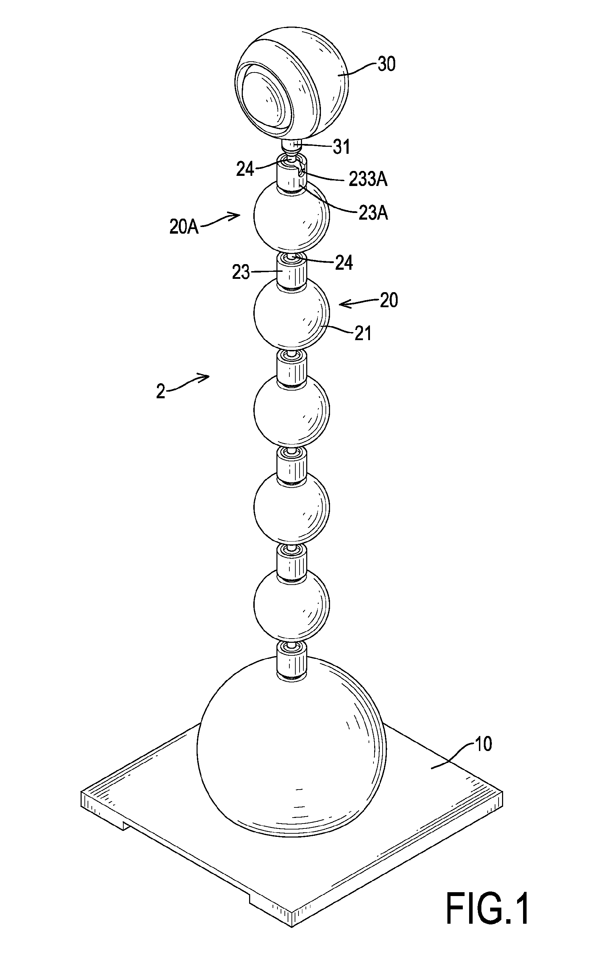

With reference to Fig. 1, an articulated lamp in accordance with the present invention comprises a base 10, a support 2 and a lighting device 30.

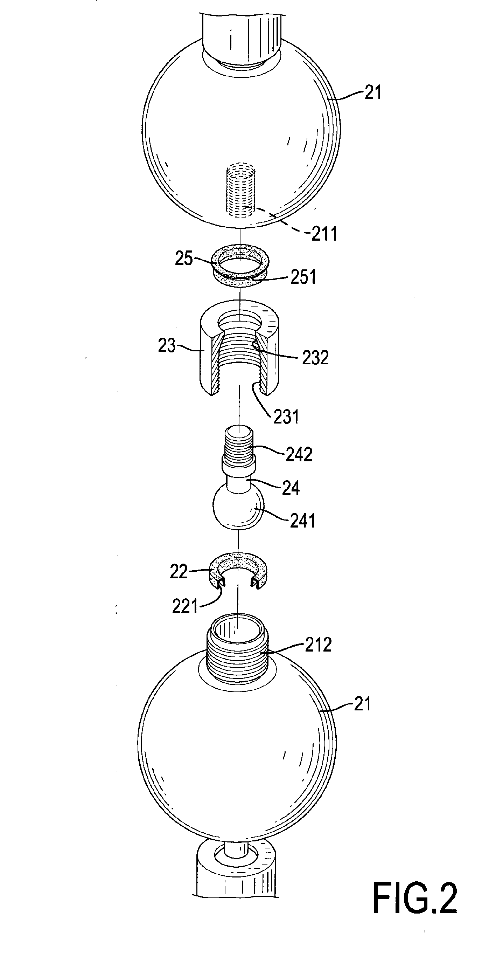

With further reference to Fig. 2, the support 2 is mounted on and protrudes up from the base 10 and has multiple ball joint assemblies 20, 20A. The ball joint assemblies 20, 20A are sequentially connected to each other, and are mounted on and protrude up from the base 10. Each ball joint assembly 20, 20A has a seat 21, a first gasket ring 22, a housing 23, 23A, a second gasket ring 25 and a connecting stud 24.

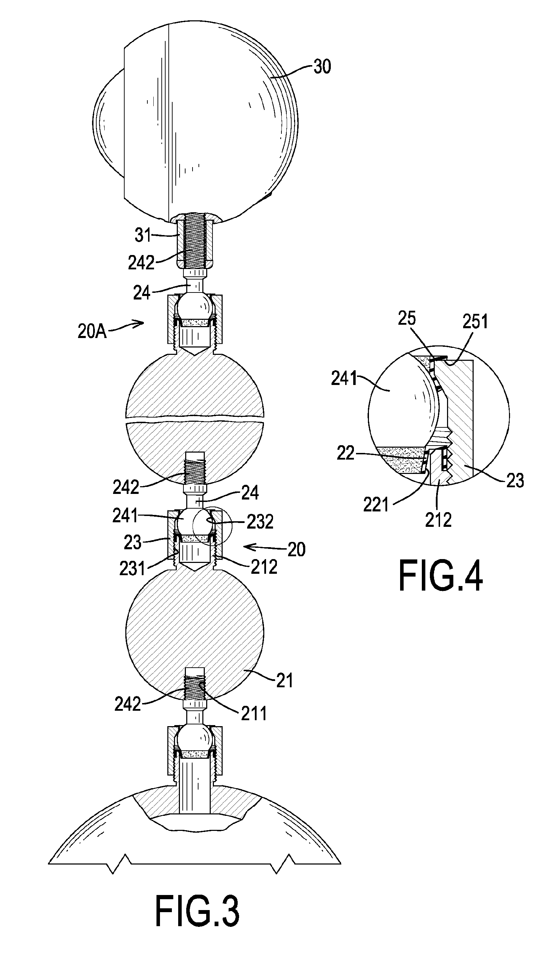

With further reference to Fig. 3, the seat 21 of a lowermost ball joint assembly 20 is securely mounted on the base 10. The seat 21 is ball-shaped and has a connecting hole 211, an inner surface and a mounting tube 212. The connecting hole 211 is formed in a bottom of the seat 21. The inner surface of the seat 21 is defined in the connector hole 211. The mounting tube 212 is formed on and protrudes from a top of the seat 21, is disposed opposite to the connecting hole 211 and has a distal edge and an outer surface.

With further reference to Fig. 4, the first gasket ring 22 is mounted on the distal edge of the mounting tube 212 of the seat 21, and has a lower end surface and a mounting groove 221. The mounting groove 221 of the first gasket ring 22 is formed in the lower end surface of the first gasket ring 22 and receives the distal edge of the mounting tube 212.

With particular reference to Fig. 2, the housing 23, 23A is mounted on and around and is attached to the mounting tube 212 of the seat 21 and has an inner lower surface 231, an inner upper surface 232 and an inner peripheral edge. Preferably, the outer surface of the mounting tube 212 and the inner lower surface 231 of the housing 23 are threaded and engage each other. The inner upper surface 232 of the housing 23 is beveled and forms a tapered internal space. The inner peripheral edge of the housing 23, 23A is defined around the inner upper surface 232 of the housing 23, 23A.

The second gasket ring 25 is mounted on and is disposed around the inner upper surface 232 of the housing 23, 23A. Preferably, the second gasket ring 25 has an outer side surface and a mounting groove 251. The mounting groove 251 of the second gasket ring 25 is formed in the outer side surface of the second gasket ring 25, receives the inner peripheral edge of the housing 23, 23A and covers the inner upper surface 232 of the housing 23, 23A.

The connecting stud 24 is connected to a following ball joint assembly 20 and has a ball head 241 and a shaft 242. The ball head 241 is rotatably mounted in the tapered internal space of the housing 23 and is selectively held between the first gasket ring 22 and the inner upper surface 232 of the housing 23 via the second gasket ring 25. The shaft 242 protrudes up from the ball head 231 and out of the housing 23, is mounted in the connecting hole 211 of the seat 21 of the following ball joint assembly 20, is attached to the seat 21 of the following ball joint assembly 20, and has an outer surface. Preferably, the inner surface of the seat 21 and the outer surface of the shaft 242 are threaded so the outer surface of the shaft 242 engages the inner surface of the seat 21 of the following ball joint assembly 20.

Furthermore, the housing 23A of a topmost ball joint assembly 20A further has at least one recess 233A formed in a top end surface of the housing 23A, and extended through an outer surface of the housing 23A and the inner upper surface 232 of the housing 23A. The shaft 242 of the topmost ball joint assembly 20A is selectively mounted in one of the at least one the recess 233A of the housing 23A of the topmost ball joint assembly 20A.

The lighting device 30 is mounted a top end of the support 2, is connected to the topmost ball joint assembly 20A and has a connecting tube 31. The connecting tube 31 protrudes down from a bottom of the lighting device 30, is mounted on and is attached to the shaft 242 of the connecting stud 24 of the topmost ball joint assembly 20A and has an inner surface. Preferably, the inner surface of the connecting tube 31 is threaded and engages the outer surface of the shaft 242 of the connecting stud 24 of the topmost ball joint assembly 20A.

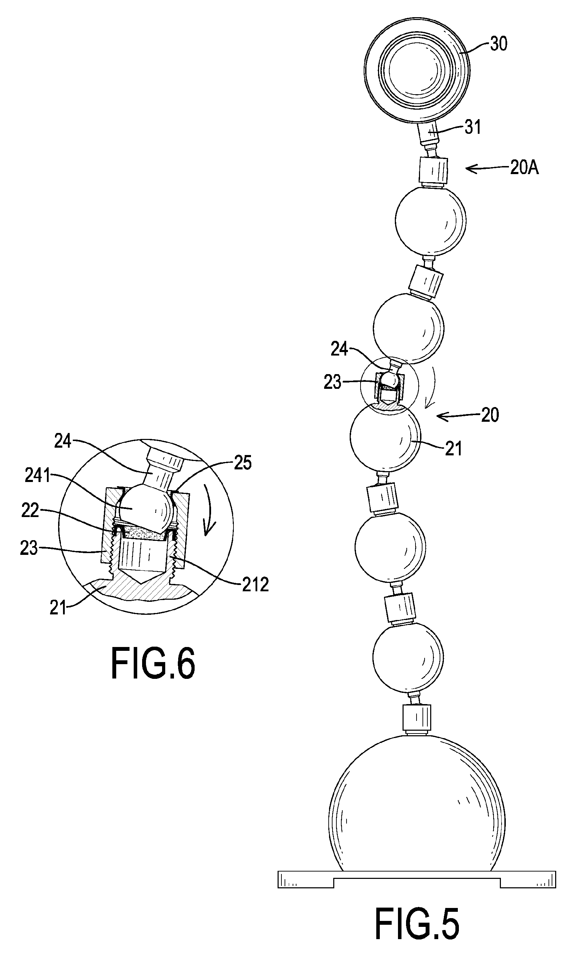

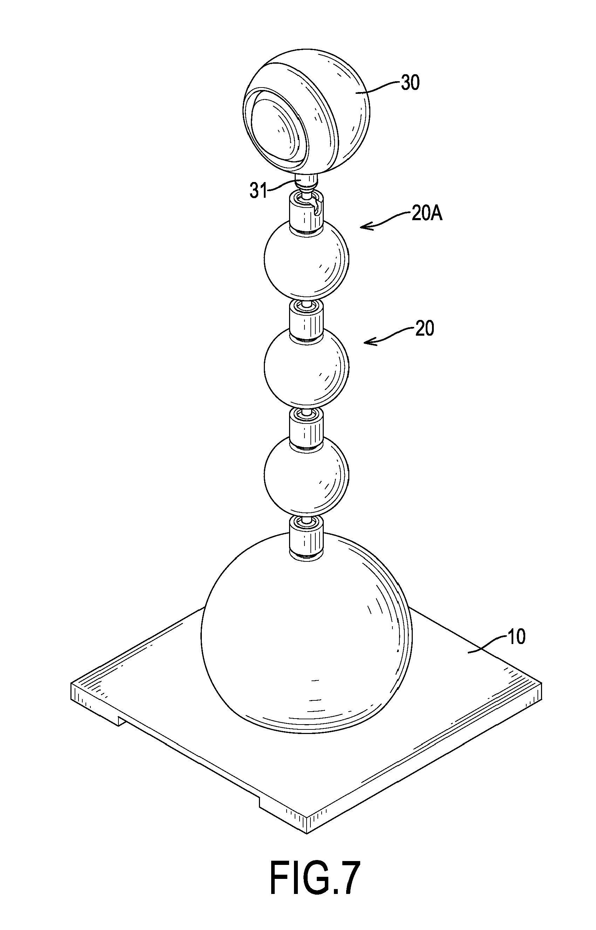

The articulated lamp as described has the following advantages. With further reference to Figs. 5 and 6, when the connecting studs 24 of the ball joint assemblies 20, 20A are pivoted or rotated, directions and ranges in which the lighting device 30 illuminates are adjusted. The first gasket rings 22 and the second gasket rings 25 prevent the ball heads 241 of the connecting stud 24 and the mounting tube 212 of the seat 21 from abrading each other. With further reference to Fig. 7, as the amount of the ball joint assemblies 20, 20A of the support 2 changes, heights of the lighting device 30 and ranges in which the lighting device 30 are able to illuminate are diversely adjusted.

## Claims

1. An articulated lamp comprising a base (10), a support (2) mounted on and protruding up from the base (10) and a lighting device (30) mounted a top end of the support (2), and the articulated lamp **characterized by**:
the support (2) has multiple ball joint assemblies (20, 20A) sequentially connected to each other and mounted on and protruding up from the base (10), and each ball joint assembly (20) having:
a seat (21), the seat (21) of a lowermost ball joint assembly (20) securely mounted on the base (10), and the seat (21) having
a connecting hole (211) formed in a bottom of the seat (21); and
a mounting tube (212) formed on and protruding from a top of the seat (21) and having a distal edge;
a first gasket ring (22) mounted on the distal edge of the mounting tube (212) of the seat (21);
a housing (23, 23A) mounted on and around and attached to the mounting tube (212) of the seat (21) and having an inner upper surface (232) being beveled and forming a tapered internal space; and
a connecting stud (24) connected to a following ball joint assembly (20) and having:
a ball head (241) rotatably mounted in the tapered internal space of the housing (23) and selectively held between the inner upper surface (232) of the housing (23) and the first gasket ring (22); and
a shaft (242) protruding up from the ball head (231) and out of the housing (23), mounted in the connecting hole (211) of the seat (21) of the following ball joint assembly (20) and attached to the seat (21) of the following ball joint assembly (20); and
the lighting device (30) is connected to a topmost ball joint assembly (20A) and has a connecting tube (31) protruding down from a bottom of the lighting device (30), mounted on and attached to the shaft (242) of the connecting stud (24) of the topmost ball joint assembly (20A).

2. The articulated lamp as claimed in claim 1, wherein
each ball joint assembly (20) further has a second gasket ring (25) mounted on and disposed around the inner upper surface (232) of the housing (23, 23A); and
the ball head (241) of the connecting stud (24) of each ball joint assembly (20) is selectively held between the second gasket ring (25) and the first gasket ring (22).

3. The articulated lamp as claimed in claim 2, wherein
the housing (23A) of the topmost ball joint assembly (20A) further has at least one recess (233A) formed in a top end surface of the housing (23A), and extended through an outer surface of the housing (23A) and the inner upper surface (232) of the housing (23A); and
the shaft (242) of the topmost ball joint assembly (20A) is selectively mounted in one of the at least one the recess (233A) of the housing (23A) of the topmost ball joint assembly (20A).

4. The articulated lamp as claimed in claim 2, wherein
the first gasket ring (22) of each ball joint assembly (20, 20A) has a lower end surface and a mounting groove (221) formed in the lower end surface of the first gasket ring (22) and receiving the distal edge of the mounting tube (212);
the housing (23, 23A) of each ball joint assembly (20) further has an inner peripheral edge defined around the inner upper surface (232) of the housing (23, 23A); and
the second gasket ring (25) of each ball joint assembly (20, 20A) has an outer side surface and a mounting groove (251) formed in the outer side surface of the second gasket ring (25), receiving the inner peripheral edge of the housing (23, 23A) and covering the inner upper surface (232) of the housing (23, 23A).

5. The articulated lamp as claimed in claim 3, wherein
the first gasket ring (22) of each ball joint assembly (20, 20A) has a lower end surface and a mounting groove (221) formed in the lower end surface of the first gasket ring (22) and receiving the distal edge of the mounting tube (212);
the housing (23, 23A) of each ball joint assembly (20) further has an inner peripheral edge defined around the inner upper surface (232) of the housing (23, 23A); and
the second gasket ring (25) of each ball joint assembly (20, 20A) has an outer side surface and a mounting groove (251) formed in the outer side surface of the second gasket ring (25), receiving the inner peripheral edge of the housing (23, 23A) and covering the inner upper surface (232) of the housing (23, 23A).

6. The articulated lamp as claimed in claim 1, 2, 3, 4 or 5, wherein the seat (21) of each ball joint assembly (20, 20A) is ball-shaped.

7. The articulated lamp as claimed in claim 6, wherein
the seat (21) of each ball joint assembly (20, 20A) has an inner surface defined in the connector hole (211) and being threaded;
the shaft (242) of the connecting stud (24) of each ball joint assembly (20, 20A) has an outer surface being threaded and engaging the inner surface of the inner surface of the seat (21) of the following ball joint assembly (20, 20A); and
the connecting tube (31) of the lighting device (30) has an inner surface being threaded and engaging the outer surface of the shaft (242) of the connecting stud (24) of the topmost ball joint assembly (30A).

8. The articulated lamp as claimed in claim 7, wherein
the mounting tube (212) of the seat (21) of each ball joint assembly (20, 20A) has an outer surface being threaded; and
the housing (23, 23A) of each ball joint assembly (20, 20A) further has an inner lower surface (231) being threaded and engaging the outer surface of the mounting tube (212) of the seat (21) of the ball joint assembly (20, 20A).
